Europäisches Patentamt

European Patent Office

Office européen des brevets

(11) Publication number : **0 449 606 A1**

(12) **EUROPEAN PATENT APPLICATION**

(21) Application number : 91302677.9

(22) Date of filing : 27.03.91

(51) Int. Cl.⁵ : **B41J 2/335, B41J 2/17,**
**C09D 11/00**

(30) Priority : 27.03.90 JP 78508/90
20.02.91 JP 26349/91

(43) Date of publication of application :
02.10.91 Bulletin 91/40

(84) Designated Contracting States :
**DE FR GB**

(71) Applicant : **SEIKO EPSON CORPORATION**
**4-1, Nishishinjuku 2-chome**
**Shinjuku-ku Tokyo-to (JP)**

(72) Inventor : **Takemoto, Kiyohiko c/o Seiko Epson**
**Corporation**
**3-5, Owa 3-Chome**
**Suwa-Shi, Nagano-Ken (JP)**

(74) Representative : **Charlton, Peter John et al**
**Elkington and Fife Prospect House 8**
**Pembroke Road**
**Sevenoaks, Kent TN13 1XR (GB)**

(54) Ink jet recording method and ink composition.

㊐ This invention provides an ink jet recording method which can prevent ink droplets from running off the track and give blur-free, first-line printings to commercially available, general-purpose paper and an ink composition well suited for use with such a system. This method makes use of an ink composition comprising (i) water, (ii) a colorant and (iii) a fluorine-based surface active agent in such an amount as to allow its angle of contact with respect to a material forming the ink jet nozzle face of an ink jet apparatus to lie at 40° or less at normal temperature and its angle of contact of with respect to recording paper to lie at 40° or more at normal temperature.

F I G . I (a)   F I G . I (b)

EP 0 449 606 A1

The present invention relates to an ink jet recording method and an ink composition used with it. More specifically, this invention concerns an ink jet recording method making use of an ink composition which is more likely to wet a material defining an ink jet nozzle face of an ink jet apparatus, but is less likely to wet recording paper and an ink composition for ink jet recording well suited for use with such a method.

Ink jet recording has some advantages of making less noise at the time of printing and enabling the implementation of high speed recording. In order to obtain first-line printings, it is advantageous to use ink less likely to wet recording paper or, in well-defined terms, having a large contact angle. Conventional ink preparations for ink jet recording are generally broken down into an aqueous ink based on water and an oily ink based on organic solvents. Of the two, the former is of greater practical value in view of the ease with which its angle of contact with respect to recording paper is controlled. Thus there are now commercially available many versions of aqueous ink preparations having a large contact angle with respect to recording paper.

However, the aforesaid ink less likely to wet recording paper is, at the same time, less likely to wet a material forming the ink jet nozzle face of an ink jet apparatus, such as glass; metals, e.g. titanium, chromium, iron, cobalt, nickel, copper, zinc, tin and gold; alloys, e.g. those based on nickel-phosphorus, tin-copper-phosphorus, copper-zinc (BS) and stainless steel (SUS); and plastics, e.g. polycarbonate, polysulfone, ABS resin (acrylonitrile-butadiene-styrene copolymer), polyethylene terephthalate and polyacetal. This results in a serious problem that the ejected ink droplets go off the track, making the resulting printings blurry. In other words, as the angle of contact of the ink with respect to the material forming the jet nozzle face increases, the ink stays on the nozzle face in the form of uneven and thick lumps. Now assume that ink stays on a part of the nozzle face around the ink jet nozzles and nothing remains on another part. Then, the ejected ink droplets would be entrained in the ink staying on the first-mentioned part, offering an impediment to their vertical ejecting to the nozzle face.

In order to prevent ink from running off the track, it has been proposed to add to it an anionic, cationic or nonionic hydrocarbon surfactant, thereby making it more likely to wet the ink jet nozzle face and so enabling it to spread uniformly around the ink jet nozzles. However, such ink is so likely to wet the jet nozzle face and, at the same time, so likely to wet recording paper, that the resultant printings can be blurred and inferior in quality.

Therefore, an object of this invention is to provide an ink jet recording method capable of preventing the jetted ink droplets from going off the track and enabling first-line printings to be recorded on commercially available, general-purpose recording paper and an ink composition for ink jet recording well suited for use with such a method.

Another object of this invention is to provide a recording method making use of an ink composition which is more likely to wet the ink jet nozzle face of an ink jet apparatus but less likely to wet general-purpose recording paper and an ink composition for ink jet recording lending itself well to such a method.

More specifically, the present invention provides an ink jet recording method involving use of an ink composition which has a contact angle of 40° or less at normal temperature with respect to a material forming the ink jet nozzle face of an ink jet apparatus and a contact angle of 40° or more at normal temperature with respect to recording paper.

The present invention provides an ink composition for ink jet recording as well, which comprises (i) water, (ii) a colorant and (iii) a fluorocarbon surfactant in such an amount as to allow the angle of contact of ink with respect to a material forming the ink jet nozzle face of an ink jet apparatus to lie at 40° or less at normal temperature and the angle of contact of ink with respect to recording paper to lie at 40° or more at normal temperature.

According to this invention, it is possible to feed ink droplets in a more stable manner and obtain first-line printings on recording paper. This effect is even more especially when an aqueous ink preparation containing a fluorocarbon surfactant is used in combination with an ink jet apparatus in which the ink jet nozzle face is formed of glass.

The aforesaid and other objects and features of this invention will now become apparent from a reading of the following detailed description with reference to the accompanying drawings, in which:-

FIGURE 1a provides an illustration of how uniformly and thinly ink is spreading on the jet nozzle face of an ink jet apparatus,

FIGURE 1b is a view of Figure 1a, as viewed from Direction A,

FIGURE 2a is an illustration of how unevenly and thickly ink is staying on the ink jet nozzle face of an ink jet apparatus, and

FIGURE 2b is a view of Figure 2a, as viewed from Direction A.

## Ink Jet Recording System

The ink jet recording method according to this invention makes an improvement in or relating to the so-called "ink jet recording technique" so far available in the art. The ink jet recording method and ink composition according to the present invention can be applied as such to ink jet printers relying upon the conventional ink jet recording technique.

As mentioned above, the ink jet recording method according to the present invention makes use of an ink composition with the contact angle with respect to a material forming the ink jet nozzle face of an ink jet apparatus being 40° or less at normal temperature and the contact angle with respect to recording paper being 40° or more at normal temperature.

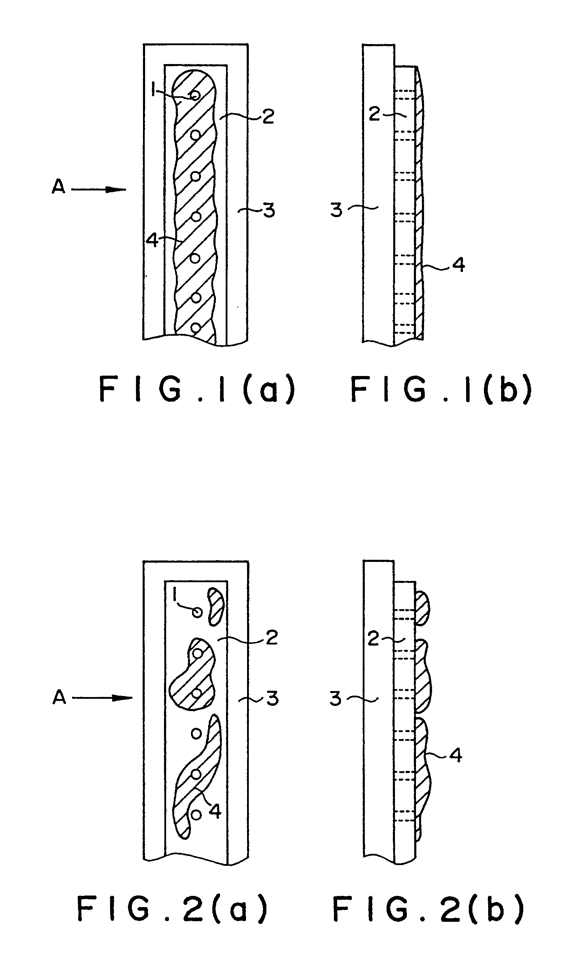

The ink composition, with the contact angle with respect to a material forming the ink jet nozzle face of an ink jet apparatus being 40° or less at normal temperature, wets the ink jet nozzle face uniformly and thinly, as schematically illustrated in Figure 1. As the ink composition spreads uniformly and thinly all over the ink jet nozzle face of an ink jet apparatus, it entrains the ejected ink droplets uniformly in every direction, so that they can be ejected vertically to the nozzle face. When the contact angle of the ink composition with respect to the material forming the ink jet nozzle face exceeds 40°, on the other hand, the nozzle face cannot uniformly be wetted by the ink composition. Consequently, ink lumps stays locally on the nozzle face, as shown in Fig. 2, making it impossible to eject ink droplets vertically to the nozzle face.

The ink jet method according to the present invention makes use of an ink composition with the contact angle with respect to recording paper being 40° or more at normal temperature. As a result, it is possible to achieve blur-free, first-line printings on recording paper. When the contact angle with respect to recording paper is below 40°, on the other hand, it is impossible to obtain satisfactory printings on recording paper, since the recording paper are stained by ink.

Ink Composition

The ink composition well suited for use with the ink jet recording method according to the present invention comprises (i) water, (ii) a colorant and (iii) a fluorocarbon surfactant allowing the angle of contact of ink with respect to the ink jet nozzle face of an ink jet apparatus to lie at 40° or less at normal temperature and the angle of contact of ink with respect to recording paper to lie at 40° or more at normal temperature.

As can be understood, the ink composition according to the present invention may be called an "aqueous ink" based on water.

In the present disclosure, the wording "fluorocarbon surfactant" is understood to refer to a surfactant in which the hydrogen atoms bonded to the carbon atoms of a hydrocarbon chain serving usually as a hydrophobic group are partly or wholly substituted by fluorine atoms. Particular preference is given to surfactants whose hydrophobic group or hydrocarbon chain has about 3-15, preferably about 5-12 carbon atoms. The degree of fluorine substitution is at least 1, preferably at least 2 in terms of the ratio of the number of fluorine atoms to the number of hydrogen atoms. Generally including a hydrophobic group comprising a hydrocarbon chain and a hydrophilic group, surfactants are classified in terms of the nature of that hydrophilic group. For instance, those containing carboxylates, sulfoxylates, sulfates or phosphates as hydrophilic groups are called anionic surfactants; those containing amines or ammonium as hydrophilic groups cationic surfactants; those containing ethylene oxide and hydroxyl groups as hydrophilic groups nonionic surfactants; and those containing a combination of anionic with cationic groups as hydrophilic groups ampholytic surfactants. However, it is noted that no critical limitation is imposed upon the nature of the hydrophilic group of the fluorocarbon surfactant used in the present invention.

In the ink composition according to the present invention, the aforesaid fluorocarbon surfactant is used in such an amount that it makes the contact angle of that composition with respect to the material forming the ink jet nozzle face of an ink jet apparatus lie at 40° or less at normal temperature and the contact angle of that composition with respect to recording paper lie at 40° or more at normal temperature. To put it another way, the amount of this fluorocarbon surfactant used may be determined depending upon the type of the material forming the ink jet nozzle face of an ink jet apparatus and in consideration of other components of the ink composition, i.e. water, the colorant and any desired ingredients. For instance, when the ink jet nozzle face of an ink jet apparatus is made of glass, e.g. silica glass, silicate glass, boro-silicate glass and soda-lime glass which may optionally include $ZrO_2$, $Al_2O_3$, CaO and $Na_2O$; metals, e.g. titanium, chromium, iron, cobalt, nickel, copper, zinc, tin and gold; alloys, e.g. those based on nickel-phosphorus, tin-copper-phosphorus, copper-zinc (BS) and stainless steel (SUS); and plastics, e.g. polycarbonate, polysulfone, ABS resin (acrylonitrile-butadiene-styrene copolymer), polyethylene terephthalate and polyacetal, especially when it is made of glass, the aforesaid contact angles are achievable if the fluorocarbon surfactant is used in an amount of generally 0.002 to 5% by weight, preferably in a matter of 0.005 to 2% by weight. At too small an amount it makes the ink composition less likely to wet the glass, whereas in too large an amount it makes the ink composition more likely to wet recording paper.

More illustratively, the fluorine-based surfactant is available in the name of Fluorad FC-95, FC-98, FC-129,

· FC-135, FC-170C and FC-430, all made by 3M Co., Ltd., and Surfluon S-111, S-112, S-121, S-131, S-141 and S-381, all manufactured by Asahi Glass Co., Ltd.

For the ink composition according to the present invention, all colorants so far used for conventional ink compositions for ink jet recording may all be employed as such. For instance, use may be made of dyes such as direct, acidic and basic ones and/or pigments such as carbon black and aniline black. The amount of the colorant added, which may be determined in consideration of the angles of contact of the ink composition with respect to the nozzle face and recording paper, the hue and density of the color developed, the viscosity of ink, clogging-prevention capabilities and other factors, is in the range of preferably 0.1 to 10% by weight, more preferably 0.5 to 5% by weight.

Moreover, the ink composition according to this invention may contain additives for the purpose of regulating its viscosity, surface tension, pH and electrical conductivity and with a view to preventing its corrosion and deposition of metal salts. Illustrative examples of the additives may include water-soluble organic solvents such as glycerin, ethylene glycol, diethylene glycol, triethylene glycol, propylene glycol, dipropylene glycol, polyethylene glycol #200, #300 or #400, methanol, ethanol, triethanolamine, triethylene glycol monomethyl ether, formamide, dimethylsulfoxide, diethylene ethanolamine and N-ethyl-2-pyrrolidone; lithium hydroxide; sodium hydroxide; potassium hydroxide; ethylenediaminetetraacetic acid-2-sodium (EDTA); Proxel XL2 (anticeptics made by ICI Co., Ltd.); and so on. The amounts of these additives used may be determined depending upon why they are to be added. For instance, diethylene glycol that is an organic solvent may be added in an amount of about 2-30% by weight.

The ink composition according to the present invention may be prepared in similar manners as available for conventional water-based ink compositions for ink jet recording. That is, feed mixtures may be mixed together, optionally accompanied by pulverization, and then filtered into ink compositions.

The present invention will now be explained more specifically, but not exclusively, with reference to the following examples.

## Example 1

Provided was a mixture comprising the following components.

| | |
|---|---|
| C.I. Direct Black 154 | 5 wt.% |
| Ethylene glycol | 20 wt.% |
| Fluorad FC-430 (a fluorocarbon surfactant made by 3M Co., Ltd.) | 0.02 wt.% |
| Pure water | 74.09 wt.% |

This mixture was heated and stirred at 60°C for 1 hour. The obtained solution was filtered through a 10-mesh filter into an ink composition.

## Examples 2-4

Mixtures comprising the following components were formed into ink compositions according to Examples 2-4 in similar manners as described in Example 1.

### Example 2

| | |
|---|---|
| C.I. Direct Black 154 | 1 wt.% |
| Glycerin | 25 wt.% |
| Fluorad FC-129 (a fluorocarbon surfactant made by 3M Co., Ltd.) | 0.005 wt.% |
| Pure water | 79.995 wt.% |

Example 3

| C.I. Direct Black 154 | 2 wt.% |
| Glycerin | 18 wt.% |
| n-Propanol | 4 wt.% |
| Surfluon S-381 (a fluorocarbon surfactant made by Asahi Glass Co., Ltd.) | 0.1 wt.% |
| Pure water | 75.9 wt.% |

Example 4

| C.I. Direct Black 168 | 3 wt.% |
| Triethanolamine | 15 wt.% |
| n-Propanol | 3 wt.% |
| Fluorad FC-95 (a fluorocarbon surfactant made by 3M Co., Ltd.) | 2 wt.% |
| EDTA | 0.2 wt.% |
| Pure water | 76.8 wt.% |

Example 5

Provided was a mixture comprising the following components.

| Carbon black MA100 (made by Mitsubishi Chemical Industries, Ltd. | 10 wt.% |
| Solspers 1200 (a dispersant made by I.C.I. Co., Ltd.) | 0.5 wt.% |
| Glycerin | 10 wt.% |
| Ethanol | 5 wt.% |
| Fluorad FC-170C (a fluorocarbon surfactant made by 3M Co., Ltd.) | 0.1 wt.% |
| Fluorad FC-135 (a fluorocarbon surfactant made by 3M Co., Ltd.) | 0.1 wt.% |
| Pure water | 74.3 wt.% |

Added to the aforesaid mixture was an equal volume of glass beads having a mean particle size of 1 μm. Subsequent three-hour sand milling gave a dispersion, which was then filtered through a 50-μm mesh membrane filter to remove dust, crude particles, etc., thereby preparing an ink composition.

Comparative Example 1-4

Ink compositions were obtained from the following mixtures by following the procedures of Example 1.

Comparative Example 1

| C.I. Direct Black 154 | 5 wt.% |

| Diethylene glycol | 20 wt.% |
|---|---|
| Pure water | 75 wt.% |

Comparative Example 2

| C.I. Direct Black 154 | 1 wt.% |
|---|---|
| Glycerin | 25 wt.% |
| Potassium hydroxide | 1 wt.% |
| Fluorad FC-129 (a fluorocarbon surfactant made by 3M Co., Ltd.) | 0.001 wt.% |
| Pure water | 72.999 wt.% |

Comparative Example 3

| C.I. Direct Black 154 | 2 wt.% |
|---|---|
| Glycerin | 18 wt.% |
| n-Propanol | 4 wt.% |
| Surfluon S-381 (a fluorocarbon surfactant made by Asahi Glass Co., Ltd.) | 3 wt.% |
| Pure water | 74 wt.% |

Comparative Example 4

| C.I. Direct Black 168 | 3 wt.% |
|---|---|
| Triethanolamine | 15 wt.% |
| n-Propanol | 3 wt.% |
| Sodium dioctylsulfosuccinate (a hydrocarbon surfactant) | 2 wt.% |
| EDTA | 0.2 wt.% |
| Pure water | 76.8 wt.% |

Comparative Example 5

An ink composition was obtained from the following mixture by following the procedures of Example 5.

| Carbon black MA 100 (Mitsubishi Chemical Industries, Ltd.) | 10 wt.% |
|---|---|
| Glycerin monostearate (a dispersant) | 0.5 wt.% |
| Glycerin | 10 wt.% |
| Ethanol | 5 wt.% |
| Polyethylene glycol #400 monolaurate (a hydrocarbon surfactant) | 0.2 wt.% |
| Pure water | 74.3 wt.% |

6

Measurement of Surface Tension and Contact Angle

Measured were the surface tensions at 25°C and contact angles with respect to glass and recording paper of the ink compositions obtained in Examples 1 to 5 and Comparative Examples 1 to 5. Used as the recording paper was copy paper P made by Xerox Co., Ltd. The angles of contact were determined at normal temperature after ink droplets had come into contact with the glass and copy paper. The results are as follows.

## Table 1

| Ink | Surface Tension (mN/m) | Contact Angle (°) | |
|---|---|---|---|
| | | Glass | Copy Sheet P |
| Ex. 1 | 29 | 21 | 43 |
| 2 | 35 | 37 | 68 |
| 3 | 30 | 25 | 85 |
| 4 | 23 | 15 | 42 |
| 5 | 18 | 23 | 48 |
| Comp. Ex. 1 | 55 | 43 | 53 |
| 2 | 41 | 44 | 71 |
| 3 | 17 | 10 | 25 |
| 4 | 25 | 16 | 28 |
| 5 | 28 | 19 | 37 |

Ink Ejecting and Printing Quality

The ink compositions obtained in Examples 1 to 5 and Comparative Examples 1 to 5 were measured with regard to the ink ejecting and the quality of the printings obtained therewith. To this end, Ink Jet Printer HG-2500 (made by Seiko-Epson Co., Ltd.), whose ink jet face was made of glass, was used in combination with the aforesaid copy sheets P. The room temperature was 25°C.
Ink Ejecting:
Ten-centimeter (10-cm) long rule marks were drawn every jet nozzle, and how largely the central positions of all dots on each rule mark deviated, as viewed vertically, was determined. The ink droplets were estimated to run on the track, (as shown by a circle in Table 2), when the dots on every rule mark lied within a maximum deviation of 50 μm, whereas the ink droplets were estimated to run off the track, (as shown by a cross in Table 2), when the dots on at least one rule mark showed a maximum deviation larger than 50 μm.
Printing Quality:
The roundness or K of each of arbitrarily selected ten dots was found by the following equation:

$$K = 4\pi S/l^2$$

wherein S is the dot's area and 1 is the dot's circumferential length. The printings were estimated to be blur-free, (as shown by a circle in Table 2), when all the dots had a roundness of 0.7 or larger, whereas the printings were estimated to be blurred, (as shown by a cross in Table 2), when at least one dot had a roundness below 0.7.

## Table 2

| Ink | Ink Ejecting | Printing Quality |
|---|---|---|
| Example 1 | ○ | ○ |
| 2 | ○ | ○ |
| 3 | ○ | ○ |
| 4 | ○ | ○ |
| 5 | ○ | ○ |
| Comp. Ex. 1 | × | ○ |
| 2 | × | ○ |
| 3 | ○ | × |
| 4 | ○ | × |
| 5 | ○ | × |

In what state the ink compositions stayed on the ink jet nozzle face was also observed. The ink compositions of Examples 1 to 5 and Comparative Examples 3 to 5 each spread in the form of a uniform and thin ink layer, as illustrated in Figures 1a and 1b, in contrast to the ink compositions of Comparative Examples 1 to 2 which stayed in the form of uneven and thick ink lumps.

As can be understood from Tables 1 and 2, the ink compositions of Examples 1 to 5 and Comparative Examples 3-5, each having a contact angle of 40° or less with respect to the glass, were so more likely to wet the glass that their droplets could run well on the track, making their feed stable. However, the ink compositions of Comparative Examples 1 to 2, each having a contact angle of 40° or more with respect to the glass, were so less likely to wet the glass so that their droplets run off the track, making the resulting printings blurry.

The ink compositions of Examples 1 to 5 and Comparative Examples 1 to 2, each having a contact angle of 40° or more with respect to the recording sheets, were so less likely to wet the recording sheets that blur-free, first-line printings could be obtained. However, the ink compositions of Comparative Examples 3 to 5, each having a contact angle of 40° or less with respect to the recording sheets, were so more likely to wet the recording sheets that the resulting printings could be blurred.

In similar manners as described above, first-line printings could be also obtained on papers including Xerox 4024 (Xerox Co., Ltd.), Neenah Bond (Kimbery-Clark Co., Ltd.), Strathmore Writing (Strathmore Paper Co., Ltd.), Congueror (Wiggins Teape Limited) and Yamayuri (Honshu Seishi Co., Ltd.).

## Claims

1. An ink jet recording method involving the use of an ink composition which has a contact angle of 40° or less at normal temperature with respect to a material forming the ink jet nozzle face of ink jet equipment and a contact angle of 40° or more at normal temperature with respect to recording paper.

2. An ink jet recording method as claimed in claim 1, wherein said ink composition comprises water, a colorant and a fluorocarbon surfactant in such an amount as to allow its angle of contact with respect to a material forming the ink jet nozzle face of ink jet equipment to lie at 40° or less at normal temperature and its angle of contact of with respect to recording paper to lie at 40° or more at normal temperature.

3. An ink jet recording method as claimed in claim 2, wherein said fluorocarbon surfactant accounts for 0.005 to 2% by weight of said ink composition.

4. An ink jet recording method as claimed in claim 2, wherein said colorant and said fluorocarbon surfactant account for 0.1 to 10% by weight and 0.005 to 2% by weight of said ink composition, respectively.

5. An ink jet recording method as claimed in claim 1, wherein the ink jet nozzle face of an ink jet recording apparatus is glass.

6. An ink composition for ink jet recording, which comprises water, a colorant and a fluorocarbon surfactant in such an amount as to allow its angle of contact with respect to a material forming the ink jet nozzle face of ink jet equipment to lie at 40° or less at normal temperature and its angle of contact of with respect to recording paper to lie at 40° or more at normal temperature.

7. An ink composition for ink jet recording as claimed in claim 5, wherein said fluorocarbon surfactant accounts for 0.005 to 2% by weight of said ink composition.

8. An ink composition for ink jet recording as claimed in claim 5, wherein said colorant and said fluorine-based surfactant account for 0.1 to 10% by weight and 0.005 to 2% by weight of said ink composition, respectively.

F I G . I (a)     F I G . I (b)

F I G . 2 (a)     F I G . 2 (b)

**European Patent Office**

# EUROPEAN SEARCH REPORT

Application Number

| DOCUMENTS CONSIDERED TO BE RELEVANT | | | EP 91302677.9 |
|---|---|---|---|
| Category | Citation of document with indication, where appropriate, of relevant passages | Relevant to claim | CLASSIFICATION OF THE APPLICATION (Int. Cl.5) |
| Y | DE - A1 - 3 536 340 (RICOH CO., LTD) * Page 7, lines 29-34; page 19, lines 22-35; claims 1-7 * | 1 | B 41 J 2/335 B 41 J 2/17 C 09 D 11/00 |
| A |  | 2-4, 6-8 |  |
| Y | DE - A1 - 3 741 799 (SIEMENS AG) * Abstract; claims * | 1 |  |
| A |  | 6 |  |
| A | CH - A5 - 651 253 (FUJI) * Page 3, column 2; claims 7, 8 * | 1,2,6 |  |
| A | PATENT ABSTRACTS OF JAPAN, unexamined applications, vol. 13, No. 179, April 26, 1989 THE PATENT OFFICE JAPANESE GOVERNMENT page 159 C 590 * Kokai-No. 1-9 279 (RICOH CO LTD) * | 2,6 | TECHNICAL FIELDS SEARCHED (Int. Cl.5) B 41 J B 41 M C 09 D |
| A | PATENT ABSTRACTS OF JAPAN, unexamined applications, vol. 10, No. 269, September 12, 1986 THE PATENT OFFICE JAPANESE GOVERNMENT page 56 C 372 * Kokai-No. 61-91 276 (NIPPON) * | 2,6 |  |

The present search report has been drawn up for all claims

| Place of search | Date of completion of the search | Examiner |
|---|---|---|
| VIENNA | 26-06-1991 | LANG |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)